Europäisches Patentamt

(19) European Patent Office

Office européen des brevets

(11) Publication number: **0 016 304**
**B1**

(12) ## EUROPEAN PATENT SPECIFICATION

(45) Date of publication of patent specification: **25.04.84**

(51) Int. Cl.³: **E 21 B 21/08, F 16 K 47/04**

(21) Application number: **80100173.6**

(22) Date of filing: **15.01.80**

(54) Choke for controlling the flow of drilling mud.

(30) Priority: **08.03.79 US 18508**
**16.04.79 US 30473**

(43) Date of publication of application:
**01.10.80 Bulletin 80/20**

(45) Publication of the grant of the patent:
**25.04.84 Bulletin 84/17**

(84) Designated Contracting States:
**BE DE FR GB NL**

(56) References cited:
**FR - A - 2 225 667**
**US - A - 2 014 314**
**US - A - 2 728 547**
**US - A - 3 521 853**
**US - A - 4 047 695**

(73) Proprietor: **Claycomb, Jack R.**
**8226 Waynemer**
**Houston, Texas, U.S.A. (US)**

(72) Inventor: **Claycomb, Jack R.**
**8226 Waynemer**
**Houston, Texas, U.S.A. (US)**

(74) Representative: **Fisher, Bernard et al,**
**Raworth, Moss & Cook 36 Sydenham Road**
**Croydon Surrey CRO 2EF (GB)**

Courier Press, Leamington Spa, England.

## Choke for controlling the flow of drilling mud

In the drilling of an oil well, the drilling lubricant is called drilling mud. It picks up cuttings from the bottom of the well and carries them to the top of the well and then to a mud pit where the chips or cuttings are separated. This permits the mud to be recycled and used again. The fluid flow system involving the mud is a high pressure system; accordingly, it is necessary to control this flow system with a choke. Chokes, however, run into great difficulties in that the mud and the cuttings carried by it are very abrasive. Because they are abrasive, they rapidly destroy the valve and seat mechanism in the choke.

A mud release vale is disclosed in U.S. Patent Specification No. 2,728,547 which valve is acknowledged as prior art in the first part of claim 1 and comprises a hollow valve having a passage therethrough, a valve seat having an encircling tapered face surrounding an axial passage past said tapered face for directing mud flow past said tapered face within the valve body, a valve element having an external tapered face movable into a concentric centrally positioned location within the valve seat, means for moving the valve element into a fully closed position relative to said valve seat and inlet and outlet means communicating with said passage through the valve body. The valve of this prior disclosure is described as being intended to route mud flow either to a drilling operation or to a slush pit under the control of a double acting piston operated by the supply of fluid under pressure and is described as either being open or closed. The tapered faces of the valve seat and the valve element taper in a direction opposite to the mud flow and closure of the valve is achieved by sealing engagement of the tapered faces. Thus as the valve element is displaced towards the closed position, the gap between the tapered faces progressively reduces until these faces engage each other. Particles of appropriate size entrapped in the mud can continuously enter this gap as the tapered faces approach the engaged condition and as this gap is continuously reducing towards the closed position can become trapped between the tapered faces. Such particles are generally of an abrasive nature and can rapidly destroy the seal which the tapered faces, by their engagement, are intended to provide.

According to the present invention there is provided a choke for controlling the flow of drilling mud which comprises a hollow valve body having a passage therethrough, a valve seat having an encircling, tapered face surrounding an axial passage past said tapered face for directing mud flow past said tapered face within the valve body, a valve element having an external tapered face movable into a concentric centrally positioned location within said valve seat, means for moving said valve element into a fully closed position relative to said valve seat and inlet and outlet means communicating with said passage through said valve body characterised in that said external tapered face of said valve element on movement into said centrally positioned location within said valve seat defines a gap between itself and said valve seat tapered face for throttling the mud flow passing through said gap and controllably blocking the axial passage flow of mud past said valve seat on movement of said valve element towards said fully closed position, said valve seat being provided with an encircling valve seat shoulder lying in a plane perpendicular to the flow through said axial passage and said valve element being provided with a surrounding shoulder adapted to conform and seat against said valve seat shoulder to plug and close the flow of mud through said gap and define said fully closed position.

In one form, the choke of the present device is an elongate tubular housing or body having in one end a closure or plug which entraps a fluid operated piston. The piston is made double-acting by applying pressure to both faces controllably. The piston has a centralised plug appended to it which receives thereabout a valve element formed of an extremely hard material. It is located in a circular chamber which communicates which a lateral port where the mud flow from the well is introduced. The lateral port is directed at the valve element which is able to withstand the wear of the flow.

The apparatus further includes a circular valve seat which is inserted downstream. The valve seat is also made of hardened material and has a tapered leading edge. It has a shoulder which matches or mates with the valve element, itself. As the two are brought together, they close off the passage through the choke. The valve seat is a hollow circular ring which communicates with an outlet passage.

An alternate embodiment offers an adjustably positioned, tapered plug cooperating with a tapered seat, both of the members being formed of a hardened material. It has the feature of fitting the tapered plug into the tapered seat without contact against the sidewalls. Moreover, the throttling surface is not the surface that provides actual closure in the event that the valve is fully closed.

One advantage of the second embodiment is thus the ability of the apparatus to provide continual throttling to mud flow with surfaces which are never required to contact one another. This prevents closure of these surfaces against one another with the consequential damage that occurs should particulate cuttings be trapped between them. They close toward one another to achieve the throttling so attractive in the present invention, but they do not contact. Moreover, these surfaces are concentric to one another so that, at a given spacing or throttling position, the flow is contolled even though the plug serving as a valve may be partly worn away. Erosion of the components must be excessive and substantially total before it actually modifies the gap or spacing through the thottling flow controller.

Fig. 1 is a sectional view taken through a diameter of the choke assembly of the present invention illustrating details of construction;

Fig. 2 is a greatly enlarged, detailed view in section showing how the choke assembly closes for the purposes of illustrating how the flow, with or without particulate matter therein, is choked;

Fig. 3 is a schematic flow diagram of a hydraulic control apparatus for a choke;

Fig. 4 is an alternate embodiment showing modified mounting of the movable components in the choke assembly;

Fig. 5 is a schematic control system and improved thottling valve of the present invention;

Fig. 6 is a sectional view through the improved thottling mud valve of the present invention; and

Fig. 7 is a sectional view through an alternate form of the improved thottling mud valve of the present invention particularly illustrating details of construction which assist in assembly of the apparatus.

The choke of the present invention is identified by the numeral 10 and incorporates an elongate, tubular body 12. The body 12 is closed at one end by a plug 14 which is joined to the body 12 at a set of threads 16. The plug is provided with a pair of drilled openings 18 to enable it to be grasped by a spanner wrench to be removed. The plug is axially drilled with a passage 20 which passage is exposed to the exterior at a threaded opening 22 to enable it to be connected with a fluid line terminating in an appropriate threaded fitting. Pressurized fluid at a selected pressurized level is introduced through the passage 20 and fills a chamber 24. The chamber 24 is pressurized to a desired level for reasons to be set forth. The plug defines one end of the chamber 24, and a piston 26 is received therein. The piston has a surrounding seal 28 which seals against leakage along the cylinder wall 30. The cylinder wall 30 terminates at a shoulder 32. The piston as shown is equipped with a protruding surrounding shoulder or extension 34. The extension 34, in conjunction with the facing shoulder 32, defines a circular chamber acting on the back side of the piston. A passage 36 which is appropriately tapped with threads is formed in the wall of the housing 12. The piston thus is made double acting by selectively introducing pressurized fluid on both faces thereof. It well be appreciated that the surface area of the shoulder 34 is less than the exposed space in the chamber 24, and, accordingly, a higher pressure is required to pressurize the piston from the left.

The piston extends into an axial passage 38 of reduced diameter. Several O-rings 40 serve as seals preventing leakage.

The numeral 42 identifies a laterally extending passage which is a port for the introduction of mud at high pressure. It is the inlet port for the choke 10. The opening 42 is encircled by a groove 44. The groove 44 receives a seal ring. The seal ring is clamped against a fitting which is connected to the passage. The fitting, itself, is preferably equipped with a flange which has a number of bolt holes drilled in it which match the location of the tapped openings 46. These enable the flange to be bolted to the body 12, the body being provided with a flat face in the vicinity of the port 42.

The numeral 48 identifies a sleeve which is affixed to a central plug on one end of the piston 26. The sleeve 48 is the valve element for closure of the choke. The sleeve 48 is symmetrically constructed at the right and left-hand ends. It is hollow to fit over the circular appendage affixed to the piston 26. The sleeve 48 is preferably formed of a hardened metal, such as tungsten carbide particles embedded in a base material. It is made wear resistant. It is equipped with tapered leading edge. It is axially hollow. This enables it to be reversed on installation. It is for this reason that the right and left-hand ends are identical.

The sleeve 48 is fastened in place by a bolt 50. The bolt 50 threads axially into a tapped opening formed in the piston 26 for that purpose. The bolt, itself, seats into a cup-shaped washer 52. The washer 52 has an encircling shoulder which clamps the sleeve 48 in place. It will be noted that the sleeve 48, at each end, is undercut with a shoulder which enables the shoulder to receive the washer 52 to lock the sleeve in place. Further, the sleeve 48 is jammed against a transverse shoulder 54 at the exposed face of the piston.

The sleeve 48 serves as a valve element. It is positioned against a valve seat which is a removable insert indicated by the numeral 56. The valve seat 56 is a hollow sleeve. It is symmetrically shaped at the right and left-hand ends. At the left-hand end, it abuts a shoulder 58. At the right-hand end, a snap ring 60 is used to lock the sleeve against the shoulder 58. The seat 56 is formed of hardened material, including tungsten carbide. The tungsten carbide material is embedded as small particles in a supporting base metal which is, itself, a hard alloy. The seat 56 fits snugly in an axial passage extending from the enlarged chamber communicated with the port 42. The sleeve is provided with tapered faces 62 at each end. The tapered face serves as a valve seat which operates in conjunction with a downstream shoulder 64 to receive and seal on movement of the tapered sleeve 48 against the seat.

The left-hand end of the body 12 is axially drilled with a passage, and an internal groove is formed for receiving a snap ring 68. The snap ring 68 holds in position an internal sleeve 70.

The sleeve 70 is the downstream outlet sleeve of the apparatus. The body device terminates at a face 72 which is grooved at 74 to receive a seal ring. A surrounding flange 76 enables it to be connected with a mating flange constructed according to industry standards, and suitable holes are provided on a bolt circle to enable the body 12 to be joined to the connective apparatus.

In operation, the device is connected in a mud line by affixing the inlet line to the port 42, and an outlet line is connected to the flange 76 at the left-hand end of the equipment. Additionally, fluid control lines are connected to the threaded and tapped openings 22 and 36. A convenient technique is to connect a pressure accumulator topped with a gas (sometimes over a liquid) to the tapped opening 36. When a suitable hydraulic pressure is introduced through the opening 22, the piston is forced to the left. When that pressure is reduced, the accumulator controls the pressure on the piston to force the piston to the end of its movement.

The valve element 48 and the valve seat 56 jointly have facing tapered edges 62 and 90. As they close to a gap which might pinch or clamp on a sand particle, the seat and valve element open to a wide gap downstream. Thus, any throttling which occurs is between a pair of concentric, tapered surfaces which are aptly suited for long wear. The wear which does occur is limited because the choked flow is, in fact, almost parallel to the tapered faces through a gap defined by the tapered faces.

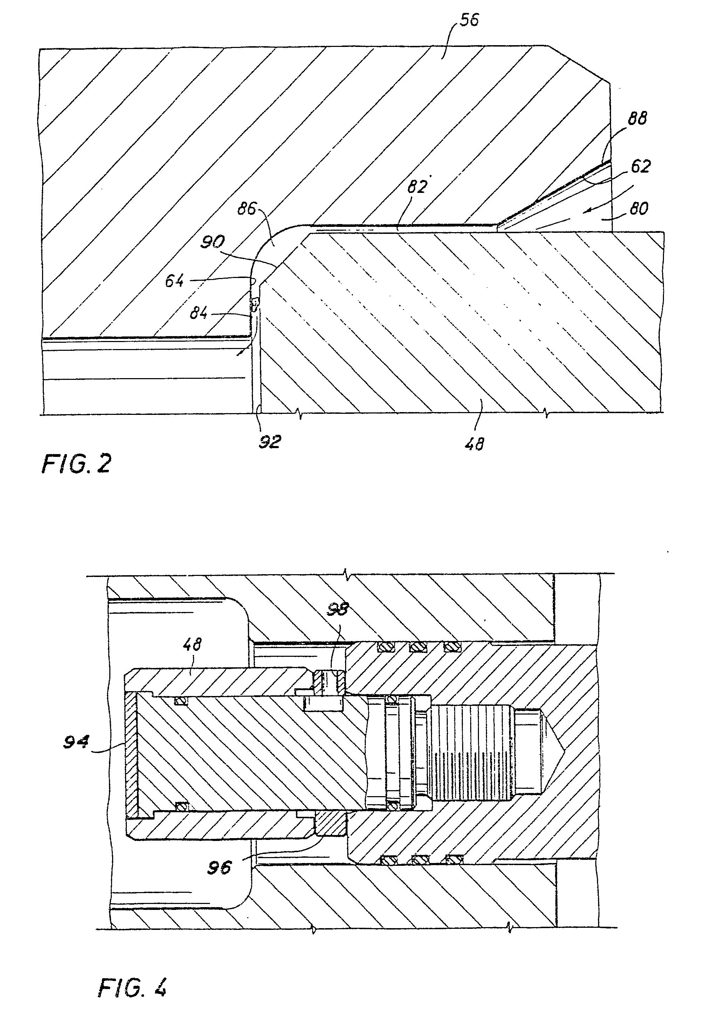

Fig. 2 is an enlarged view of the sleeve 48 positioned in the removable valve seat 56. Attention is directed to three particular areas which disclose unique features. First of all, immediately prior to full closure, the flow of mud through the funnel-shaped area 80 permits mud, but not particles, to flow into the slot between the two components. Immediately prior to full shut-off, such mud flow is funneled into a narrow constriction. The mud, itself, will flow through this funnel-shaped area 80 and into the constricted passage. Particles in the mud of a size to cause damage will not enter the passage because they will not pass through the narrow passage. More than an adequate flow of mud gets into the passage and flows under pressure to flush out any particles in transit through the passage.

Mud flow is thus introduced from the funnel-shaped area 80 and fully surrounds the sleeve 48, flowing into the narrow, slotted passage 82. Mud flowing through it is able to flush out any particles that might have been caught in the passage area 82 prior to closure of the components. The passage is about 0.002 to 0.004 inches (1 inch = 2.54 cm) in width and has the form of a complete circle.

The numeral 84 identifies a flow area between the perpendicular facing shoulders 64 and 92 on the two components. The area 84 is flushed by the flow from the concentric passage 82. As an example, if a piece of particulate trash is caught in the passage 84 during closure, it is flushed away. This is achieved during closing movement of the plug valve mechanism. At some point in time during closure, the passage 84 is wider than the passage 82. The passage 82 is limited or fixed in width during the time the passage 84 is being narrowed in width. This means that no new particles are being introduced into the passage 84. As the passage 84 narrows, additional particles are not introduced because they are caught at the funnel 80. The absence of new particles means that particles previously in the passages, including the exemplary particle shown in Fig. 2, are flushed away. The mud flows much faster as the passage 84 is reduced in size. This leaves opposing metal shoulders 64 and 92 cleared of trash particles for closing contact. Contact will prevent any further fluid-borne particle flow. As explained by the foregoing, closure is achieved timely after flushing.

Fig. 2 thus discloses an arrangement whereby flushing of particles is achieved at the instant before closure. Closure, itself, has a self-cleaning operation. As the faces 64 and 92 are brought closer together, the passage 82 does not change diameter. The flow capacity through the passage 82 is approximately constant, presuming that a constant pressure head is maintained upstream. As the passage 84 is closed, the velocity through it increases prior to cutoff. As the effective cross-sectional area of the passage 84 is reduced toward zero, the flow rate increases to thereby provide enhanced scavenging and cleaning so that all particles are removed. The net result is that the faces 64 and 92 are flushed clean the instant before closure.

The procedure described above is most effective in closing the two components together with a reduced wear rate. Wear is encountered as a result of the abrasive nature of the particles carried in the drilling mud. To this end, the sleeve 48 is preferably chamfered at its corner 90. If it is chamfered, it creates a flow cavity at 86 of redirected velocity. As the flow enters this area, it must turn, but it is turning in a larger area, and, accordingly, the velocity drops somewhat to enable the flow to turn. As the velocity drops, erosion of the components at this area is reduced. Accordingly, the sleeve is chamfered to enlarge the cavity 86, and the valve seat 56 has an internal corner which is rounded, as shown in Fig. 2, to some desired radius. This protects the corner of both components against erosion. The flow area 86 thus accommodates a turn of the flow with minimum damage to the components, and this, thereby, prolongs the life of the equipment.

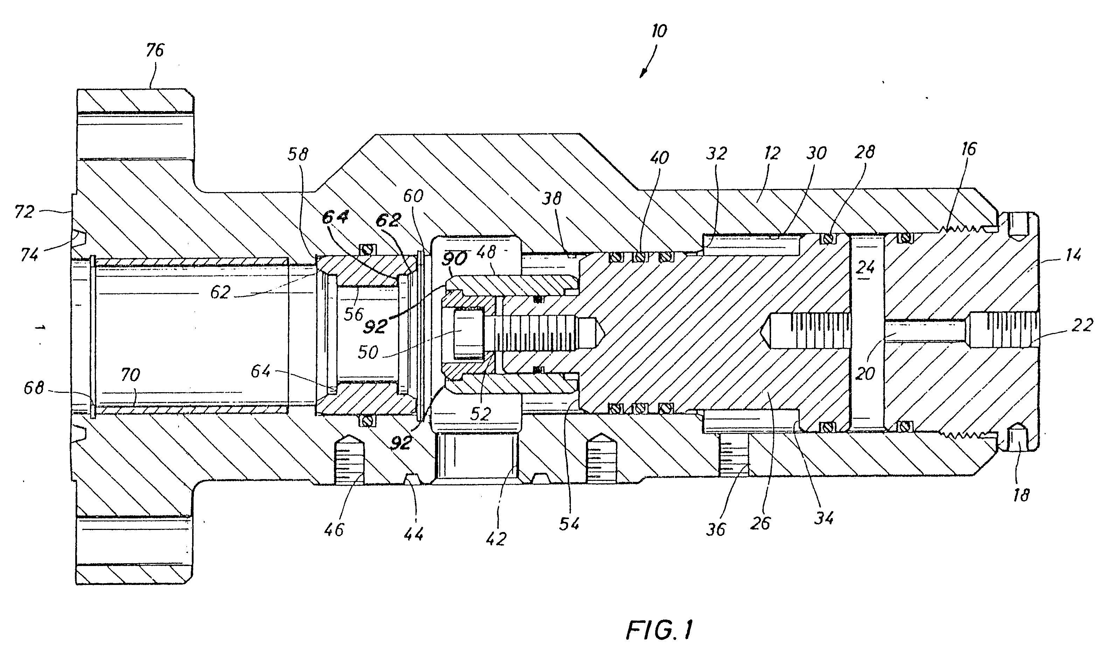

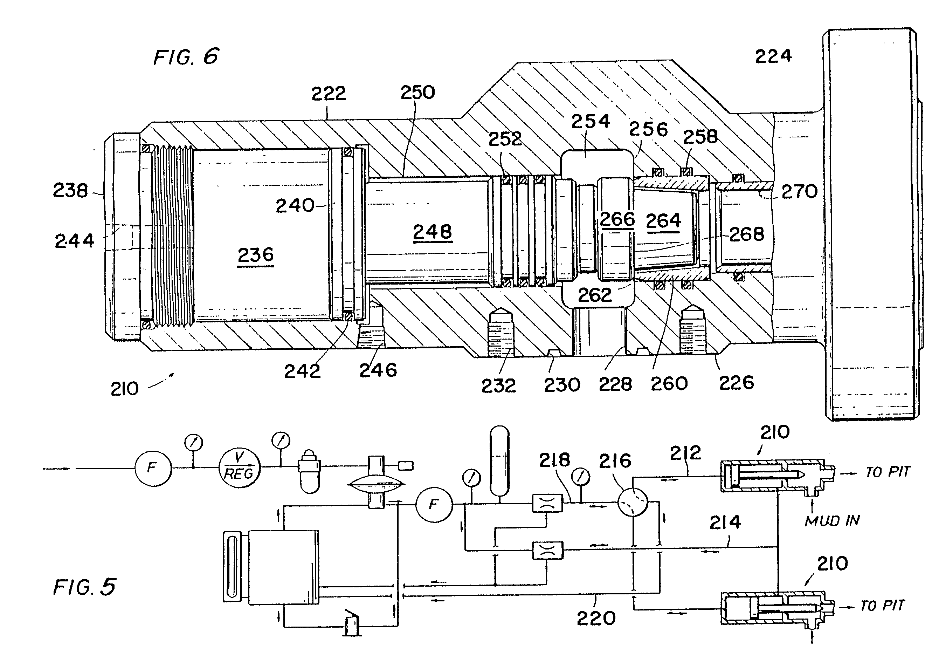

Attention is next directed to Fig. 4 of the drawings. Fig. 4 is an alternate embodiment of the disclosed invention incorporating an end plate 94. The end plate 94 prevents abrasion or wear which might otherwise impinge on the end of the apparatus shown in Fig. 1. Again, this is desirable to prevent substantial damage to the device. The end plate 94 is very useful in the prevention of wear and damage and provides longer life.

Fig. 4 further differs in that a central mounting bolt is not used. Rather, an encircling, spacer lock ring 96 is placed at the back of the sleeve 48, and a pin or set screw passes through the spacer ring at 98. This locks the ring. This is an alternate method of assembly. The use of a spacer ring is helpful to provide pressure against the face of the removable sleeve 48 fully surrounding its circumference.

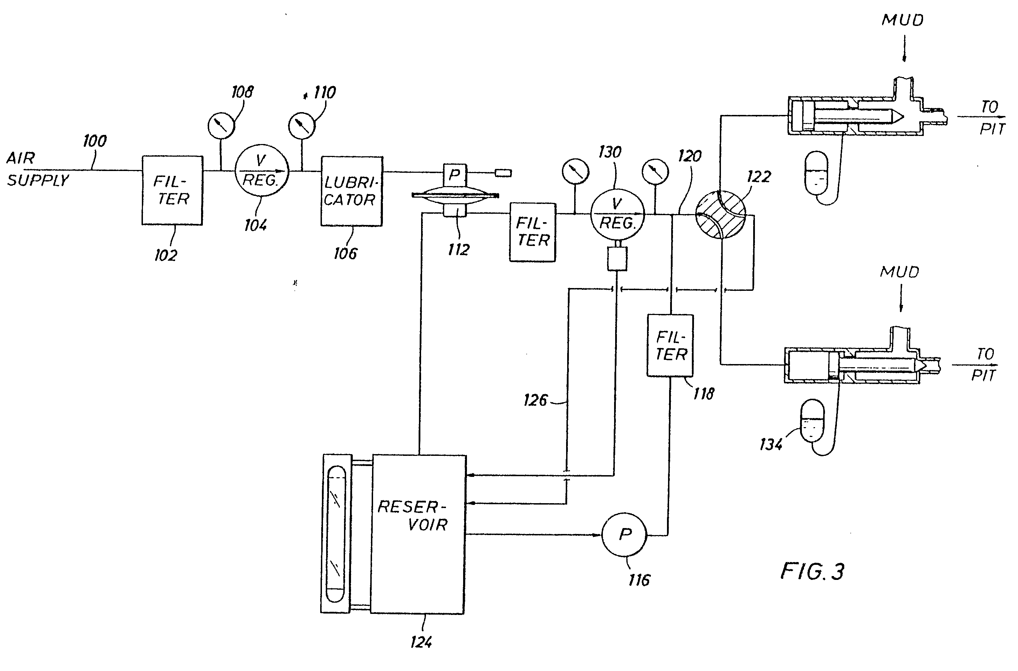

Fig. 3 of the drawings should be considered next. Fig 3 discloses a system for operation of the equipment. In Fig. 3, alternate mud chokes are shown. In addition, a power system for their operation is also depicted. Briefly, a pneumatically powered system is shown, although other systems can be used. An air powered hydraulic pump operates the choke with oil from a reservoir.

An air supply line connects through a filter. The line is identified by the numeral 100 and is connected to a filter 102 which, in turn, is connected to a pressure regulator valve 104. Suitable quantities of lubricating oil are introduced at 106, and pressure gauges are found at 108 and 110. The pressure gauges 108 and 110 provide the operator with an indication of pressure levels. The lubricator delivers air under pressure to one side of a diaphragm pump mechanism. The diaphragm operated, air driven pump mechanism 112 is in a hydraulic circuit to force regulated pressure to a choke. The hydraulic circuit includes an emergency pump 116. The pump 116 is an emergency hand powered, high pressure oil pump connected to a filter 118 which, in turn, connects to a line 120 which, in turn, passes through a control valve 122. The valve 122 is a two-position, four-way valve. It is provided with a high pressure inlet line. Additionally, it provides an alternate line to a sump, the sump being indicated at 124. The sump line is 126. The reservoir 124, of course, is maintained at minimum pressure, ordinarily atmospheric pressure. System pressure is adjusted by operation of the regulator 130, which, in turn, controls the hydraulic oil pressure to the chokes. This regulator 130 is connected to the two-position valve 122. For convenience, a pressure accumulator 134 can be used to provide a return force for operation of the chokes. The pressure accumulator is partly filled with incompressible fluid and partly with compressible air or some other gas so that a return stroke can be effected even should all the pneumatic or hydraulic equipment fail.

Attention is next directed to Fig. 5 of the drawings, where the present invention is shown along with the control apparatus for it. The mud control valve is generally identified with the numeral 210 and is typically installed in a duplex arrangement so that two of them are connected with a common control system. In the event that one fails catastrophically, the other can be used while the first is being serviced or removed from service. The mud throttling valve of the present invention is operated by hydraulic fluid under pressure. A double-acting arrangement is preferably used so that is is powered to close and also powered to open. To this end, the apparatus incorporates a fluid line 212 which delivers hydraulic fluid under pressure for the purpose of closing the choke 210. A line 214 is connected to the choke 210 for opening the choke. The lines 212 and 214 are connected on opposite sides of a hydraulic piston arranged in a cylinder which moves a push rod, all as symbolized in Fig. 5. Briefly, a four-port, two-way valve 216 controls pressure introduced to the control lines 212 and 214. When one choke is operated to the throttling position, pressure at the other choke is reduced to enable it to move to the full open position. To this end, the two-way valve 216 connects to a high pressure line 218 which provides the input for the two chokes. The valve 216 also directs hydraulic fluid flow through a line 220 which returns to a sump. The remainder of the hydraulic system shown in Fig. 5 is for the purpose of adjusting the pressure so that closure is achieved. It will be further noted that the line 214 provides hydraulic fluid at an intermediate level which forces both chokes 210 full open in the event the high pressure is reduced or switched by the valve 216.

Attention is directed to Fig. 6 of the drawings, where a choke 210 is shown in greater detail. It incorporates an elongate, cylindrical body 222 which terminates at a flange 224 which enables it to be connected to a mud line. An inlet is provided at a circular, flat face 226, the flat face centering around an inlet passage 228. A groove 230 serves as receptacle for a ring seal, and a set of threaded bolt holes 232 is also arranged on the face 226.

The elongate body terminates at a cylindrical cavity 236. The cavity 236 is closed by a threaded plug 238. The plug 238 is joined to the body to seal the chamber 236. The cylindrical chamber 236 encloses a piston 240 which fits snugly within the chamber to prevent blowby and is provided with a seal ring 242 around its periphery. Hydraulic oil under pressure is introduced through one opening at 244 and acts on one face of the piston 240. The opposite side of the piston 240 is exposed to hydraulic fluid introduced through a tapped opening 246. The tapped opening 244 is adapted to be connected to the hydraulic line 212, while the line 214 connects to the tapped opening 246. These two openings are arranged on opposite sides of the piston. Fig. 6 shows the maximum range of movement to the right. The piston can move to the left, the range of movement being limited by contact of the piston 240 against the plug 238.

The piston 240 centrally connects to a piston rod 248 which is aligned in an axially centered passage 250. The passage 250 is larger than the piston rod 248, permitting the rod 248 to move freely in the passage 250. The piston rod 248 supports a number of external grooves extending about its periphery which receive and support O-ring seals 252.

The lateral opening 228 opens into an enlarged, doughnut-shaped cavity 254 which is concentric with the piston rod passage 250. It is enlarged to provide a larger flow area. It terminates at a shoulder 256 which, in turn, centers about an axial passage extending to the end of the apparatus through the flange 224. The axial passage is internally grooved to receive seal rings 258 which are on the exterior of a tapered, sacrificial sleeve 260. The sleeve is hollow and is internally tapered, having a large left-hand end and tapering to a smaller right-hand end. The sleeve 260 is formed of hardened metal to define a wear-resistant valve seat. It additionally includes an upstream perpendicular, facing shoulder 262 which is perpendicular to the flow of drilling mud and is chamfered around its outer edge. The shoulder 262 encircles the valve choke element which is identified by the numeral 264 and has the form of a tapered, solid plug which inserts into the valve seat. The facing shoulder 262 seats against a protruding, circular enlargement 266 which faces and abuts the shoulder 262. The plug 264 has an external face with an angle tapering at the same angle as the internal face of the insert or sleeve 260. The valve element 264 substantially penetrates into the valve seat, proper. It penetrates, and, as it does, the gap between the two closes to a specified minimum such as 0.005 inches (1 inch = 2.54 cm) clearance, the clearance existing fully around the plug. The plug 264 is formed of hardened material. Ideally, the plug and the valve seat are polished and ground to a relatively smooth surface. The members are made of a hardened material, such as tungsten carbide particles embedded in a supportive matrix. The angle of taper is in the range of 0.5 degree to 23.0 degrees, ideally 1.0 degree.

The valve element includes a protruding, circular enlargement 266 which has a shoulder 268 which faces and abuts the shoulder 262. The shoulder 268 terminates at a chamfered surface around the exterior. The enlargement 266 is shown in the cavity 254, the cavity being substantially larger so that mud may flow all around the enlargement 266. The enlargement 266 is supported on an elongate, cylindrical extension of the piston rod 248. The valve element is thus carried on the piston rod 248. It will be observed that the piston rod extends along the axis of the tool from the piston 240 toward the valve seat 260. It has a stroke which carries the plug valve element from the fully closed position. Travel to the left is limited by the stroke of the piston 240. It will be further observed that the enlargement 266 is sized to pass into the axial passage 250.

The valve seat 260 is a removable and insertable sleeve which terminates by directing fluid flow into a centrally located, tubular insert 270. This is a wear sleeve having the form of right cylindrical construction and extending toward the face of the flange structure. This completes the exit passage for the mud flow after it has been choked. Again, the sleeve 270 is removable so that it can be replaced as required.

Operation of the device should be considered carefully, which description brings out certain features of the present invention. When the apparatus is installed, and presuming that an appropriate hydraulic connection is made to the fittings 244 and 246 shown in Fig. 6, the piston 240 is moved to and fro in the chamber 236 by the introduction of hydraulic fluid on one side or the other of the piston. As the piston moves to and fro, the piston rod 248 is moved. Movement of the rod 248 is conveyed through the valve element 264 which has the preferred form of a tapered plug.

Throttling of the mud flow is achieved by controlling the width of the gap. When full closure is desired, the facing shoulders 262 and 268 are contacted against one another. When full closure is achieved, no throttling action occurs in the gap because the upstream shoulders 262 and 268 prevent mud flow into the gap. The facing shoulders 262 and 268 are perpendicular to the direction of flow which is axially of the choke 210. It will be further noted that the direction of flow carries the mud from the enlarged cavity 254, between the facing, perpendicular shoulders 262 and 268 and then into the gap area around the plug 264. It is highly desirable that the enlargement 266 be formed of hardened material in the same manner as the tapered plug 264.

The arrangement of the present apparatus with the upstream perpendicular shoulders and the downstream tapered surfaces is notable. This prevents the capture of particulate material in the gap area. It is relatively easy to imagine how a particle of a certain size located in the gap at the time of closure can be pinched between the plug and sleeve. Preferably, the gap achieved momentarily between the shoulders 262 and 268 at closure limits particles to a size of no concern. Closure prevents the intrusion of particles above a specified size. This size is related to the gap downstream of the perpendicular shoulders. Imagine, for purposes of illustration, that the gap between perpendicular shoulders 262 and 268 is approximately 0.005 inches (1 inch = 2.54 cm) at which instant the gap around the plug is larger so that particles which do pass through the perpendicular shoulders are inevitably washed through the equipment.

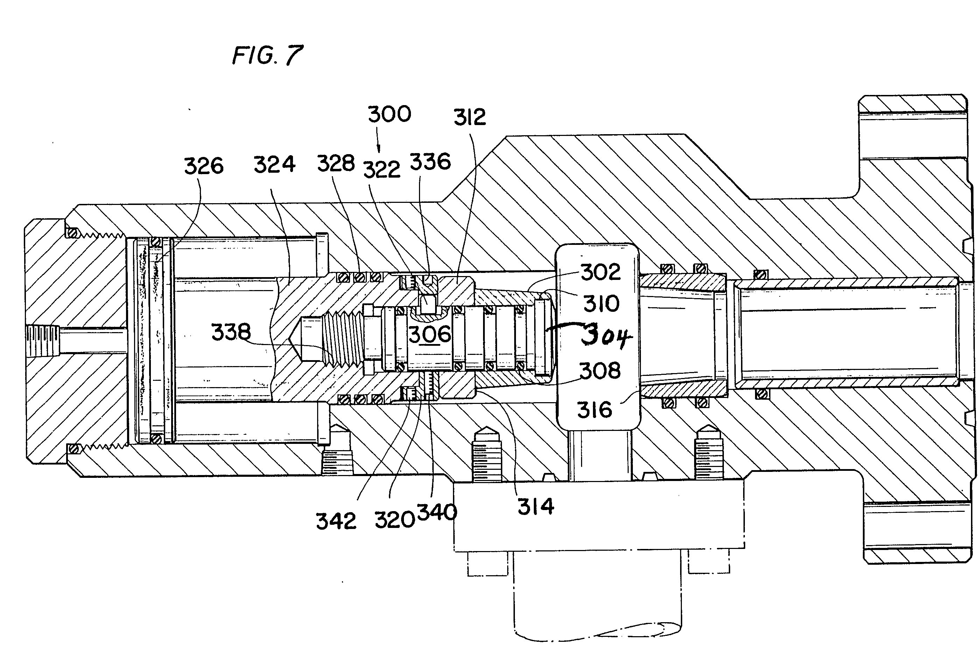

Fig. 7 of the drawings shows a construction which is very similar to that shown in Fig. 6. The mud control valve 210 of Fig. 6 illustrates in ample detail how the mud control valve of Fig. 7 operates. Accordingly, the operation of the valve 300 will be omitted because the components which comprise the valve element and valve seat remain the same. There are several differences worth noting which are amply illustrated in Fig. 7. The embodiment in Fig. 7 is referred to generally as the mud vontrol valve 300.

The mud control valve 300 incorporates a tapered, plug-like member 302 formed of a hardened material and terminating at an end cap 304. The cap 304 is spot brazed to an elongate rod 306 which has suitable grooves at various locations to receive O-rings 308. The grooves and O-rings form seals so that the drilling fluid does not leak beneath the tapered sleeve 302.

The numeral 310 identifies an enlarged protruding shoulder at the end of the elongate, rod-like member 306. The shoulder locks against the sleeve 302 which is inserted from left to right as viewed in Fig. 7 to assemble the apparatus. Thereafter, a larger ring-like member 312 is next positioned around the rod 306 to position the perpendicular shoulder 314 for seating against the shoulder 316. This is where closure actually occurs when the mud control valve 300 is fully closed. On throttling action, the shoulders 314 and 316 are positioned parallel to one another and are spaced by a distance suitable to enable the tapered plug to operate in the tapered valve seat in the same manner as described relative to Fig 6 of the drawings. Again, the member 312 is moved from left to right over the rod 306 in assembling the equipment.

The numeral 320 identifies a lock ring which is next positioned over the rod 306. A key 322 is inserted into a slot to be described. Then, the rod 306 is threaded into the cylindrical piston rod 324 which connects to the piston 326, enabling movement to be transferred to operate the mud control valve 300 via hydraulic pressure applied to the piston 326. Ideally, the piston is arranged in the cylinder with suitable connections to make a double-acting system. Lengthwise movement is coupled from the piston through the assembled structure to thereby position the tapered plug in the tapered seat in the manner described before. It will be observed that suitable O-rings 328 prevent leakage along the exterior so that drilling mud is isolated from hydraulic fluid near the piston 326.

The lock mechanism shown in Fig. 7 utilizes a key slot in the rod 306 to receive the key 322. The key may have a span of perhaps 10.0 or 15.0 degrees, referring to the circumference of the rod 306. Accordingly, the key slot is made to that width with sufficient room to spare so that the key 322 can be easily inserted. The key, when inserted, locks the ring 320 against rotation. In other words, the ring 320 is free to rotate if the key 322 is omitted. It fits somewhat loosely around the rod 306. However, its loose connection is merely a convenience to assembly so that it can be readily rotated. It incorporates a pair of oppositely located drilled holes 336 which are sized and spaced to be used with a spanner wrench. The spanner wrench imparts rotation to the ring 320 which, in turn, rotates the rod 306 to make it up at the threads 338. The threads 338 are torqued to a required tightness. Thereafter, the ring 320 is locked in position by utilizing a set screw 340 which keeps it from rattling around the rod 306. Additionally, another set screw at 342 locks it on the protruding shoulder which surrounds the rod 306.

The assembly procedure thus taught in Fig. 7 particularly features the threading of the ring 320 coupled through the key 322 to make up the threads at 338. The threads 338 must be torqued to a fairly severe standard; otherwise, vibration may unthread the apparatus at 338. If this were to occur, the valve might lock shut. Catastrophic failure is prevented by the connective mechanism shown in Fig. 7. The mud control valve 300 is disassembled from the left-hand end to remove the rod 306 which is unthreaded utilizing a spanner wrench affixed to the ring 320. The parts 302 and 312 can thereafter be replaced. The are particularly the parts which require servicing because they are exposed to maximum wear. In other regards, the mud control valve 300 functions in the same manner as the mud control valve 210 shown in Fig. 6.

While the foregoing is directed to the preferred embodiment, the scope thereof is determined by the claims which follow.

**Claims**

1. A choke for controlling the flow of drilling mud which comprises a hollow valve body (12, Fig. 1; 222, Fig. 6) having a passage therethrough, a valve seat (56, Fig. 1; 260, Fig. 6) having an encircling, tapered face (62, Fig. 1) surrounding an axial passage past said tapered face (62, Fig. 1) for directing mud flow past said tapered face within the valve body, a valve element (48, Fig. 1; 264, 266, Fig. 6; 302, 312, Fig. 7) having an external tapered face (90, Fig. 1; 264, Fig. 6; 302, Fig. 7) movable into a concentric centrally positioned location within said valve seat, means (26, Fig. 1; 240, Fig. 6; 326, Fig. 7) for moving said valve element into a fully closed position relative to said valve seat and inlet and outlet means (42, 70, Fig. 1; 270, 224, Fig. 6) communicating with said passage through said valve body characterised in that said external tapered face (90, Fig. 1; 264, Fig. 6; 302, Fig. 7) of said valve element on movement into said centrally positioned location within said valve seat (56, Fig. 1; 260, Fig. 6) defines a gap between itself and said valve seat tapered face for throttling the mud flow passing through the said gap and controllably blocking the axial passage flow of mud past said valve seat (56, Fig. 1; 260, Fig. 6) on movement of said valve element towards said fully closed position, said valve seat being provided with an encircling valve seat shoulder (64, Fig.

1; 262, Fig. 6; 316, Fig. 7) lying in a plane perpendicular to the flow through said axial passage and said valve element being provided with a surrounding shoulder (92, Fig. 1; 268, Fig. 6; 314, Fig. 7) adapted to conform and seat against said valve seat shoulder to plug and close the flow of mud through said gap and define said fully closed position.

2. A choke according to claim 1 characterised in that said valve seat comprises a removable replaceable sleeve (56, Fig. 1; 260, Fig 6) insertable into said hollow valve body (12, Fig. 1; 222, Fig. 6).

3. A choke according to claim 1 or 2 characterised in that said means for moving said valve element comprises a piston (26, Fig. 1; 240, Fig. 6; 326, Fig. 7) connected to said valve element and displaceable in a cylinder (30, Fig. 1; 236, Fig. 6) under the influence of a fluid under pressure selectively admitted to and exhausted from said cylinder through passages (20, 36, Fig. 1; 244, 246, Fig. 6).

4. A choke according to claim 1, 2 or 3 characterised in that the encircling tapered face of said valve seat (260, Fig 6) tapers inwardly in the direction of mud flow through said axial passage between said inlet and outlet means (228, 270, Fig. 6), said external tapered face (264, Fig. 6; 302, Fig. 7) of said valve element (264, 266, Fig. 6; 302, 312, Fig. 7) conforms to said valve seat tapered face, said encircling valve seat shoulder (262, Fig. 6; 316, Fig. 7) is located upstream of said valve seat tapered face considered in said direction of mud flow and said means (240, Fig. 6; 326, Fig. 7) for moving said valve element into a fully closed position moves said valve element (264, 266, Fig. 6; 302, 312, Fig. 7) in said direction of mud flow towards the fully closed position to progressively reduce said gap and control the throttling of mud flow through said gap and to bring said shoulders of said valve seat and said valve element into sealing engagement with each other with said tapered faces of said valve seat and said valve element in concentric spaced relationship defining a minimum clearance therebetween.

5. A choke according to claim 4 characterised in that said valve element comprises a tapered plug (264, Fig. 6; 203, Fig. 7) having an end portion extendable into said valve seat, said plug further including a radially outwardly protruding enlargement (266, Fig. 6; 312, Fig. 7) supporting said valve element shoulder (268, Fig. 6; 314, Fig. 7) facing said valve seat shoulder (262, Fig. 6; 316, Fig. 7).

6. A choke according to claim 5 characterised in that said plug supported enlargement (266, Fig. 6; 312, Fig. 7) overhangs said valve seat to bring said valve element shoulder (268, Fig. 6; 314, Fig. 7) and said valve seat shoulder (262, Fig. 6; 316, Fig. 7) into contact in a plane substantially perpendicular to a centerline axis of said plug (264, Fig. 6; 302, Fig. 7).

7. A choke according to any one of the preceding claims characterised in that said valve element is secured to said moving means by mounting means including lock means (50, 52, Fig. 1; 306, 310, 320, 322, Fig. 7).

8. A choke according to claim 7 characterised in that the lock means comprises threaded means (50. Fig. 1; 306, 338, Fig. 7) for attaching the valve element to said moving means and securing means (52, Fig. 1; 320, 322, 340, 342, Fig. 7).

9. A choke according to claim 8 characterised in that the securing means comprises a ring (320, Fig. 7) secured around a rod (306, Fig. 7) threadedly securing said valve element (302, Fig. 7) to said moving means (326, Fig. 7), said ring (320, Fig. 7) being secured to said rod (306, Fig. 7) by cooperative key and slot means (322, Fig. 7) and wrench connective means (366, Fig. 7) to enable a tool to be engaged therewith for rotating said ring (320, Fig. 7) and said rod (306, Fig. 7) as a unit to thread said rod (306, Fig. 7) to said moving means (326, Fig. 7).

## Revendications

1. Buse pour le contrôle du débit d'une boue de forage, qui comprend un corps de valve creux (12, Fig. 1; 222, Fig. 6) percé d'un passage traversant, un siège de valve (56, Fig. 1; 260, Fig. 6) présentant une face tronconique circonférentielle (62, Fig. 1) entourant un passage axial devant ladite face tronconique (62, Fig. 1) pour diriger le flux de boue au-delà de ladite face tronconique à l'intérieur du corps de valve, un obturateur (48, Fig. 1; 264, 266, Fig. 6; 302, 312, Fig. 7) comportant une face externe tronconique (90, Fig. 1; 264, Fig. 6; 302, Fig. 7) mobile jusqu'à une position concentrique située au centre à l'intérieur dudit siège de valve, un moyen (26, Fig. 1; 240, Fig. 6; 326, Fig. 7) pour déplacer ledit obturateur jusqu'à une position de fermeture totale par rapport audit siège de valve, et des moyens d'entrée et de sortie (42, 70, Fig. 1; 270, 224, Fig. 6) communiquant avec ledit passage traversant ledit corps de valve, caractérisée par le fait que ladite face externe tronconique (90, Fig. 1; 264, Fig. 6; 302, Fig. 7) dudit obturateur délimite, lors du mouvement jusqu'à ladite position centrale à l'intérieur dudit siège de valve (56, Fig. 1; 260, Fig. 6), un intervalle entre elle-même et ladite face tronconique du siège de valve afin d'étrangler le flux de boue passant par ledit intervalle, et de bloquer de manière commandée l'écoulement de la boue dans ledit passage axial au-delà dudit siège de valve (56, Fig. 1; 260, Fig. 6) lors du mouvement dudit obturateur vers ladite position de fermeture totale, ledit siège de valve étant muni d'un épaulement circonférentiel (64, Fig. 1; 262, Fig. 6; 316, Fig. 7) situé dans un plan perpendiculaire au flux parcourant ledit passage axial, et ledit obturateur étant doté d'un épaulement (92, Fig. 1; 268, Fig. 6; 314, Fig. 7) qui l'entoure et est adapté pour épouser la forme dudit épaulement dudit siège de valve et s'appliquer contre ce dernier en vue d'entraver et de bloquer le flux de boue par ledit intervalle, et de déterminer ladite position de fermeture totale.

2. Buse selon la revendication 1, caractérisée par le fait que ledit siège de valve consiste en un manchon amovible remplaçable (56, Fig. 1; 206, Fig. 6) pouvant être inséré dans ledit corps de valve creux (12, Fig. 1; 222, Fig. 6).

3. Buse selon la revendication 1 ou 2, caractérisée par le fait que ledit moyen pour déplacer ledit obturateur consiste en un piston (26, Fig. 1; 240, Fig. 6; 326, Fig. 7) relié audit obturateur et mobile dans un cylindre (30, Fig. 1; 236, Fig. 6) sous l'action d'un fluide sous pression sélectivement admis dans ledit cylindre et évacué de celui-ci par des canaux (20, 36, Fig. 1; 244, 246, Fig. 6).

4. Buse selon la revendication 1, 2 ou 3, caractérisée par le fait que la face tronconique circonférentielle dudit siège de valve (260, Fig. 6) décroît de section vers l'intérieur dans la direction de l'écoulement de la boue par ledit passage axial entre lesdits moyens d'entrée et de sortie (228, 270, Fig. 6) ladite face externe tronconique (264, Fig. 6; 302, Fig. 7) dudit obturateur (264, 266, Fig. 6; 302, 312, Fig. 7) épouse la forme de ladite face tonconique du siège de valve, ledit épaulement (262, Fig. 6; 316, Fig. 7) entourant ledit siège de valve est situé en amont de ladite face tronconique dudit siège de valve observé dans ladite direction de l'écoulement de la boue, et ledit moyen (240, Fig. 6; 326, Fig. 7) pour déplacer ledit obturateur à une position de fermeture totale déplace cet obturateur (264,266, Fig. 6; 302, 312, Fig. 7) dans ladite direction de l'écoulement de la boue vers la position de fermeture intégrale, de manière à réduire progressivement ledit intervalle et à maîtriser l'étranglement du flux de boue passant par ledit intervalle, et à amener lesdits épaulements du siège de valve et de l'obturateur en contact hermétique l'un avec l'autre, lesdites faces tronconiques dudit siège de valve et dudit obturateur en relation concentrique d'espacement délimitant entre elles un jeu minimal.

5. Buse selon la revendication 4, caractérisée par le fait que ledit obturateur consiste en un bouchon tronconique (264, Fig. 6; 302, Fig. 7) pourvu d'une zone extrême qui peut s-étendre dans ledit siège de valve, ledit bouchon comportant en outre un collet (266, Fig. 6; 312, Fig. 7) radialement en saillie vers l'extérieur et supportant ledit épaulement (268, Fig. 6; 314, Fig. 7) de l'obturateur situé en regard de l'épaulement (262, Fig. 6; 316, Fig. 7) du siège de valve.

6. Buse selon la revendication 5, caractérisée par le fait que ledit collet (266, Fig. 6; 312, Fig. 7) supporté par le bouchon surplombe ledit siège de valve afin d'amener ledit épaulement (268, Fig. 6; 314, Fig. 7) de l'obturateur au contact dudit épaulement (262, Fig. 6; 316, Fig. 7) du siège de valve dans un plan sensiblement perpendiculaire à un axe médian dudit bouchon (264, Fig. 6; 302, Fig. 7).

7. Buse selon l'une quelconque des revendications précédentes, caractérisée par le fait que ledit obturateur est assujetti audit moyen de déplacement par des moyens de montage comprenant des moyens de verrouillage (50, 52, Fig. 1; 306, 310, 320, 322, Fig. 7).

8. Buse selon la revendication 7, caractérisée par le fait que les moyens de verrouillage consistent en des moyens filetés (50, Fig. 1; 306, 338, Fig. 7) pour relier l'obturateur audit moyen de déplacement et auxdits moyens de fixation (52, Fig. 1; 320, 322, 340, 342, Fig. 7).

9. Buse selon la revendication 8, caractérisée par le fait que les moyens de fixation consistent en une bague (320, Fig. 7) calée autour d'une tige (306, Fig. 7) assujettissant par filetage ledit obturateur (302, Fig. 7) audit moyen de déplacement (326, Fig. 7), ladite bague (320, Fig. 7) étant fixée à ladite tige (306, Fig. 7) par la combinaison d'une clavette et d'une fente associées (322, Fig. 7) et par un moyen (336, Fig. 7) de liaison d'une clé pour permettre l'engagement d'un outil en vue de faire tourner ladite bague (320, Fig. 7) et ladite tige (306, Fig. 7) en tant qu'ensemble monobloc de façon à visser ladite tige (306, Fig. 7) dans ledit moyen de déplacement (326, Fig. 7).

**Patentansprüche**

1. Drosselventil zum Steuern des Durchflusses von Bohrschlamm, mit einem einen Durchgang durch sich aufweisenden hohlen Ventilkörper (12, Fig. 1; 222, Fig. 6), einem Ventilsitz (56, Fig. 1; 260, Fig. 6) mit einer umgebenden abgeschrägten Fläche (62, Fig. 1), die einen axialen Durchgang an der abgeschrägten Fläche (62, Fig. 1) vorbei zur Vorbeileitung der Schalammströmung an der abgeschrägten Fläche innerhalb des Ventilkörpers umgibt, einem Ventilelement (48, Fig. 1; 264, 266, Fig. 6; 302, 312, Fig. 7) mit einer äußeren abgeschrägten Fläche (90, Fig. 1; 264, Fig. 6; 302, Fig. 7), die in eine konzentrische zentral angeordnete Position innerhalb des Ventilsitzes bewegbar ist, Einrichtungen (26, Fig. 1; 240, Fig. 6; 326, Fig. 7) zur Bewegung des Ventilelementes in eine vollständig geschlossene Position gegenüber dem Ventilsitz sowie mit dem Durchgang durch den Ventilkörper in Verbindung stehenden Einlaß- und Auslaßeinrichtungen (42, 70, Fig. 1; 270, 224, Fig. 6), dadurch gekennzeichnet, daß die äußere abgeschrägte Fläche (90, Fig. 1; 264, Fig. 6; 302, Fig. 7) des Ventilelementes bie der Bewegung in die zentral angeordnete Position innerhalb des Ventilsitzes (56, Fig. 1; 260, Fig. 6) eine Lücke zwischen sich und der abgeschrägten Ventilsitzfläche bildet, um den durch die Lücke gelangenden Schlammdurchfluß zu drosseln und den axialen Durchgangsdurchfluß des Schlammes an dem Ventilsitz (56, Fig. 1; 260, Fig. 6) vorbei bei der Bewegung des Ventilelementes in Richtung auf die vollständig geschlossene Position steuerbar zu blockieren, der Ventilsitz mit einer umgebenden Ventilsitzschulter (64, Fig. 1; 262, Fig. 6; 316, Fig. 7) versehen ist, die in einer senkrecht zu dem Durchfluß durch den axialen Durchgang verlaufenden Ebene liegt, und das Ventilelement mit einer emgebenden Schulter (92, Fig. 1; 268, Fig. 6; 314, Fig. 7) versehen ist, die derart ausgebildet und angeordnet ist, daß sie der Ventilsitzshulter entspricht und an ihr aufsitzt, um den Durchfluß von Schlamm durch die Lücke zuzustöpseln und zue schließen und die vollständig geschlossene Position zu definieren.

2. Drosselventil nach Anspruch 1, dadurch gekennzeichnet, deaß der Ventilsitz eine entfernbare ersetzbare Hülse (56, Fig. 1; 260, Fig. 6) aufweist, die in den hohlen Ventilkörper (12, Fig. 1; 222, Fig. 6) einsetzbar ist.

3. Drosselventil nach Anspruch 1 oder 2, dadurch gekennzeichnet, daß die Einrichtung zur Bewegung des Ventilelementes einen Kolben (26, Fig. 1; 240, Fig. 6; 326, Fig. 7) aufweist, der mit dem Ventilelement verbunden und in einem Zylinder (30, Fig. 1; 326, Fig. 6) unter dem Einfluß eines unter Druck stehenden Fluides verlagerbar ist, das wahlweise in den Zylinder durch Durchgänge (20, 36, Fig. 1; 244, 246, Fig. 6) eingelassen und aus diesem abgesaugt wird.

4. Drosselventil nach Anspruch 1, 2 oder 3, dadurch gekennzeichnet, daß die umgebende abgeschrägte Fläche des Ventilsitzes (260, Fig. 6) in der Richtung des Schlammdurchflusses durch den axialen Durchgang zwischen der Einlaß- und der Auslaßeinrichtung (228, 270, Fig. 6) nach innen abgeschrägt ist, die äußere abgeschrägte Fläche (264, Fig. 6; 302, Fig. 7) des Ventilelementes (264, 266, Fig. 6; 302, 312, Fig. 7) der abgeschrägten Ventilsitzfläche entspricht, die umgebende Ventilsitzschulter (262, Fig. 6; 316, Fig. 7) stromauf der abgeschrägten Ventilsitzfläche, betrachtet in der Richtung des Schlammdurchflusses, angeordnet ist und die Einrichtung (240, Fig. 6; 326, Fig. 7) zur Bewegung des Ventilelementes in eine vollständig geschlossene Stellung das Ventilelement (264, 266, Fig. 6; 302, 312, Fig. 7) in der Richtung des Schlammdurchflusses in Richtung auf die vollständig geshlossene Stellung bewegt, um die Lücke nach und nach zu verringern und die Drosselung des Schlammdurchflusses durch die Lücke zu steuern und die Schultern des Ventilsitzes und das Ventilelement in abdichtenden Eingriff miteinander zu bringen, wobei die abgeschrägten Flächen des Ventilsitzes und das Ventilelement in konzentrischer beabstandeter Beziehung ein Minimalspiel zwischeneinander definieren.

5. Drosselventil nach Änspruch 4, dadurch gekennzeichnet, daß das Ventilelement einen sich verjüngenden Stöpsel (264, Fig. 6; 302, Fig. 7) mit einem Endabschnitt aufweist, der in den Ventilsitz einrückbar ist, wobei der Stöpsel weiterhin eine radial nach außen vorspringende Vergrößerung (266, Fig. 6; 312, Fig. 7) aufweist, die die Ventilelement schulter (268, Fig. 6; 314, Fig. 7) haltert, die der Ventilsitzschulter (262, Fig. 6; 316, Fig. 7) gegenüber liegt.

6. Drosselventil nach Anspruch 5, dadurch gekennzeichnet, daß die vom Stöpsel gehalterte Vergrößerung (266, Fig. 6, 312, Fig. 7) über den Ventilsitz überkragt, um die Ventilelementschulter (268, Fig. 6; 314, Fig. 7) und die Ventilsitzschulter (268, Fig. 6; 314, Fig. 7) in einer im wesentlichen senkrecht zu einer Längsmittelachse des Stöpsels (264, Fig. 6; 302, Fig. 7) verlaufenden Ebene in Kontakt zu bringen.

7. Drosselventil nach einem der vorhergehenden Ansprüche, dadurch gekennzeichnet, daß das Ventilelement mit der Bewegungseinrichtung mit Befestigungseinrichtungen befestigt ist, die Verriegelungseinrichtungen (50, 52, Fig. 1; 306, 310, 320, 322, Fig. 7) enthalten.

8. Drosselventil nach Anspruch 7, dadurch gekennzeichnet, daß die Verriegelungseinrichtung Gewindeeinrichtungen (50, Fig. 1; 306, 338, Fig. 7) zur Anbringung des Ventilelementes an der Bewegungseinrichtung und Befestigungseinrichtung (52, Fig. 1; 320, 322, 340, 342, Fig. 7) aufweist.

9. Drosselventil nach Anspruch 8, dadurch gekennzeichnet, daß die Befestigungseinrichtung einen Ring (320, Fig. 7) aufweist, der um eine Stange (306, Fig. 7) gesichert ist, die mit Hilfe einer Verschraubung das Ventilelement (302, Fig. 7) an der Bewegungseinrichtung 326, Fig. 7) befestigt, wobei der Ring (320, Fig. 7) an der Stange (306, Fig. 7) mit Hilfe zusammenwirkender Keil- und Schlitzeinrichtungen (322, Fig. 7) und Schlüsselverbindungseinrichtungen (336, Fig. 7) befestigt ist, um es zu erlauben, daß ein Werkzeug damit in Eingriff gebracht werden kann, um den Ring (320, Fig. 7) und die Stange (306, Fig. 7) als eine Einheit zu drehen, um die Stange (306, Fig. 7) an die Bewegungseinrichtung (326, Fig. 7) zu schrauben.

0 016 304

FIG.1

FIG. 2

FIG. 4

2

FIG.3

FIG. 6

FIG. 5

0 016 304

FIG. 7